Europäisches Patentamt

European Patent Office

Office européen des brevets

(11) Veröffentlichungsnummer : **0 049 785**
**B1**

(12) **EUROPÄISCHE PATENTSCHRIFT**

(45) Veröffentlichungstag der Patentschrift :
09.01.85

(21) Anmeldenummer : 81107487.1

(22) Anmeldetag : 21.09.81

(51) Int. Cl.⁴ : **C 09 D 17/00, C 09 D 11/02, C 09 C 1/00**

(54) Konzentrierte flüssige Zubereitungen von anorganischen Pigmenten und deren Verwendung.

(30) Priorität : 08.10.80 DE 3037989

(43) Veröffentlichungstag der Anmeldung :
21.04.82 Patentblatt 82/16

(45) Bekanntmachung des Hinweises auf die Patenterteilung : 09.01.85 Patentblatt 85/02

(84) Benannte Vertragsstaaten :
CH DE FR GB IT LI

(56) Entgegenhaltungen :
DE-A- 2 156 603
FR-A- 2 289 586
FR-A- 2 376 691
GB-A- 2 005 697
US-A- 4 168 180
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Beide, Horst
Dubliner Strasse 21
D-6700 Ludwigshafen (DE)
Erfinder : Daubach, Ewald, Dr.
Thomas-Mann-Strasse 52
D-6700 Ludwigshafen (DE)
Erfinder : Hambrecht, Juergen, Dr.
An der Steige 12
D-6903 Neckargemuend (DE)

**Beschreibung**

Die Erfindung betrifft stabile konzentrierte flüssige Zubereitungen von anorganischen Pigmenten und deren Verwendung.

Wegen der im Vergleich zu organischen Pigmenten geringeren Farbstärke der anorganischen Pigmente ist es vorteilhaft von letzteren Zubereitungen mit möglichst hohem Gehalt an Pigment herzustellen.

Um Schwierigkeiten bei der Anwendung, z. B. beim Einfärben wäßriger Kunststoffdispersionen zu vermeiden, werden Präparationen verwendet, die nichtionogene wasserlösliche oberflächenaktive Mittel enthalten. Solche Stoffe sind z. B. Umsetzungsprodukte von Ethylenoxid mit Alkanolen, Phenolen, Aminen, Fettsäuren oder Fettsäureamiden und Umsetzungsprodukte von Aminen, Di- und Polyaminen mit Propylenoxid und dann mit Ethylenoxid.

Es gelingt jedoch mit diesen Stoffen nicht, gießbare, stabile konzentrierte wäßrige Zubereitungen von anorganischen Pigmenten herzustellen. Auch ein Zusatz weiterer Hilfsmittel in Mengen, die keinen negativen Einfluß auf das anwendungstechnische Verhalten haben, führte nicht zur Lösung des Problems. Als solche weiteren Hilfsmittel kommen wasserlösliche Ligninsulfonate, Kondensationsprodukte aus Naphthalinsulfonsäure und Formaldehyd oder Copolymerisate aus Acrylnitril/Acrylsäuremethylester, Acrylamid/Methacrylamid, Vinylpyrrolidon/Vinylpropionat, Polyacrylsäure und Polyvinylpyrrolidon in Betracht.

Aus der GB-A-2 005 697 sind konzentrierte flüssige Zubereitungen von anorganischen Pigmenten bekannt, die als Dispergiermittel 0,001 bis 7 Gew.-% (bezogen auf Pigment) eines Carboxylgruppen tragenden und in wäßrigem Alkali löslichen Polymeren enthalten. Als flüssiges Medium kann die Zubereitung Wasser oder Wasser und mit Wasser mischbare Lösungsmittel enthalten. Daneben kann die Zubereitung noch Netzmittel, Schaumverhütungsmittel und Verdickungsmittel in geringer Menge enthalten. Als Netzmittel kommen anionische und nichtionische in Betracht. Die nichtionischen Netzmittel sind Ethylenoxid- und/oder Propylenoxid-Addukte von Fettsäuren, Estern, Alkoholen, Aminen, Amiden, Phenolen oder von den entsprechenden Schwefelverbindungen. Im einzelnen wird in den Beispielen 18 und 20 nur der Benzylether des Umsetzungsproduktes von Octylphenol mit 16 Ethylenoxid genannt.

Aufgabe der vorliegenden Erfindung war es, konzentrierte, flüssige Zubereitungen von anorganischen Pigmenten zu entwickeln, die gießbar sind und keinen nachteiligen Einfluß auf filmbildende Homo- oder Mischpolymerisate haben.

Es wurde gefunden, daß gießbare, konzentrierte Zubereitungen vorliegen, wenn diese — bezogen auf (a + b + c + d) —

a) 50 bis 80 Gew.-% feinteiliges anorganisches Pigment,

b) 1 bis 15 Gew.-% mindestens eines Oxalkylierungsprodukts auf der Basis von

$b_1$) Umsetzungsprodukten von $C_2$- oder $C_3$-Alkylendiaminen oder Poly-$C_2$- oder -$C_3$-alkylendiaminen mit Propylenoxid und dann mit Ethylenoxid,

$b_2$) Umsetzungsprodukten von aliphatischen oder cycloaliphatischen Hydroxyverbindungen mit 3 bis 9 C-Atomen und 3 bis 6 primären und/oder sekundären Hydroxylgruppen mit Propylenoxid und dann mit Ethylenoxid, wobei der Anteil an den endständigen Polyethylenoxidblöcken bei den Umsetzungsprodukten $b_1$) und $b_2$) 40 bis 80 Gew.-% beträgt, oder Gemischen davon,

c) 0,1 bis 7 Gew.-% eines Copolymerisates, das in Form seiner Alkalimetall- oder Ammoniumsalze wasserlöslich ist und das — bezogen auf das Copolymerisat in Form der freien Säure — aus

$c_1$) 90 bis 50 Gew.-% Styrol und/oder Vinyltoluol und

$c_2$) 10 bis 50 Gew.-% Acrylsäure, Methacrylsäure und/oder Maleinsäureanhydrid aufgebaut ist und das Copolymere ein mittleres Molekulargewicht von 500 bis 10 000 hat und die Carboxylgruppen zu 50 bis 100 % neutralisiert sind,

d) 18,9 bis 48,9 Gew.-% Wasser oder Mischungen aus Wasser und Wasserrückhaltemitteln und gegebenenfalls

e) bis zu 5 Gew.-% weitere in solchen Zubereitungen übliche Hilfsmittel enthalten.

Erfindungswesentlich ist, daß die Zubereitungen neben den Oxalkylierungsprodukten (b) das Copolymerisat (c) enthalten.

Die konzentrierten Zubereitungen der vorliegenden Erfindung sind flüssig und gießbar. Das in der Zubereitung enthaltene Pigment ist stabil dispergiert und setzt sich auch nach längerem Stehen nicht als Bodensatz ab. Evtl. nach sehr langem Stehen gebildeter Bodensatz kann durch Rühren wieder leicht dispergiert werden. Mit den neuen konzentrierten Zubereitungen ist es möglich z. B. Druckfarben für den Flexodruck oder textilen Pigmentdruck oder Kunststoffdispersionen für die Zurichtung von Leder mit hohen Farbstärken herzustellen, ohne daß Nachteile für die Bindemittel auftreten.

Das Copolymerisat (c) ist aufgebaut aus

$c_1$) 90 bis 50 Gew.-% Styrol und/oder Vinyltoluol und

$c_2$) 10 bis 50 Gew.-% Acrylsäure, Methacrylsäure und/oder Maleinsäureanhydrid.

Das Copolymerisat ist in Form seiner Alkalimetall- oder Ammoniumsalze in Wasser löslich und enthält die Comonomeren in statistischer Verteilung.

Das Copolymerisat (c) muß ein mittleres Molekulargewicht zwischen 500 und 10 000, vorzugsweise zwischen 500 und 5 000 aufweisen. Besonders wirksam sind Copolymerisate mit einem mittleren Molekulargewicht von 800 bis 2 800, weshalb diese besonders bevorzugt sind. Die Molekulargewichte von (c) wurden dampfdruckosmometrisch bei Konzentrationen von 0,1 Gew.-% in Chloroform bei 37 °C im MECHROLAB-Osmometer bestimmt.

Als (c) sind Copolymere aus 60 bis 80 Gew.-% ($c_1$) und 40 bis 20 Gew.-% ($c_2$) bevorzugt. Von diesem sind Copolymere aus Styrol ($c_1$) und Acrylsäure/Methacrylsäure und/oder Maleinsäureanhydrid besonders bevorzugt.

Das Copolymerisat (c) wird nach bekannten Verfahren hergestellt, z. B. analog der in der GB-A-1 185 283 beschriebenen diskontinuierlichen Lösungspolymerisation in stark regelnden Lösungsmitteln und in Gegenwart größerer Mengen an Radikalinitiatoren und gegebenenfalls in Gegenwart von regelnden Verbindungen wie Mercaptanen. (c) kann auch durch eine kontinuierliche Hochtemperaturpolymerisation gemäß der DE-B-25 02 172 in Abwesenheit von Hilfsstoffen wie Radikalinitiatoren und Reglern bei 200 bis 400° hergestellt werden. Zur Anwendung werden die Polymerisate mit Hilfe von Alkalimetall/Erdalkalimetallhydroxiden, Ammoniak, primären, sekundären und/oder tertiären Aminen partiell bis vollständig in die entsprechenden Salze überführt.

Als Hydroxide kommen z. B. Natriumhydroxid, Kaliumhydroxid, Bariumhydroxid, Calciumhydroxid und als Amine z. B. n-Butylamin, tert.-Butylamin, Morpholin, Ethylendiamin, Urotropin in Betracht.

Bevorzugt sind Copolymerisate (c), deren Carboxylgruppen zu 100 bis 80 % neutralisiert sind.

Die Menge an (c) beträgt, bezogen auf (a + b + c + d), 0,1 bis 7 Gew.-%. Da in der Regel bereits mit 0,1 bis 1 Gew.-% (c) optimale Zubereitungen erhalten werden, ist diese Menge bevorzugt. Die Menge an (c) in den Zubereitungen ist auch von der vorgesehenen Anwendung abhängig. So wird in Zubereitungen, die zum Färben von starkflockend wirkenden wäßrigen Anstrichmitteln verwendet werden sollen, den Gehalt an (c) so niedrig wie möglich halten (0,1 bis 0,5 %), damit keine oder nur geringe Flockung eintritt.

Als anorganische Pigmente kommen die bekannten in Betracht, z. B. Titandioxid, Nickeltitangelb, Chromtitangelb, Eisenoxidgelb, Eisenoxidrot, Eisenoxidschwarz, Cadmiumpigmente, Chromgelb, Blei-Molybdat-Orange, Blei-Molybdat-Rot, Chromoxidgrün, Ultramarinblau, gegebenenfalls mit Verdünnungsmitteln wie Chinaclay, Bariumsulfat, Zinkoxid und Talkum.

Als Oxalkylierungsprodukte (b) kommen in Betracht: Propylenoxid/Ethylenoxid-Anlagerungsprodukte auf der Basis von

2.1 $C_2$-/$C_3$-Alkylendiaminen und Poly-$C_2$/$C_3$-alkylenpolyaminen,
· 2.2 aliphatischen oder cycloaliphatischen Polyolen mit 3 bis 9 C-Atomen und 3 bis 6 primären und/oder sekundären Hydroxylgruppen. Solche Anlagerungsprodukte werden z. B. in der DE-C 22 36 906 beschrieben.

Die Anlagerungsprodukte (b) werden durch Umsetzung der betreffenden Verbindungen mit PO und dann mit EO erhalten, wobei die Menge PO und EO so gewählt werden, daß das der Anteil an den endständigen Polyethylenoxidblöcken 40 bis 80 Gew.-% beträgt.

Besonders bevorzugt sind Zubereitungen, die als (b) die in der DE-C-21 56 603 beschriebenen wasserlöslichen Oxalkylierungsprodukte enthalten.

Ganz besonders bewährt haben sich die Umsetzungsprodukte von Ethylendiamin und Diethylentriamin, weshalb diese für die erfindungsgemäßen Zubereitungen ganz besonders bevorzugt sind.

Die Menge (b) beträgt in den Zubereitungen 1 bis 15 Gew.-%, vorzugsweise 1 bis 7 Gew.-%, bezogen auf (a + b + c + d).

Als Wasserrückhaltemittel kommen für (d) in Mischung mit Wasser z. B. Ethylenglykol, Di- und Triethylenglykol, Propylenglykol, Tripropylenglykol, Glycerin, vorzugsweise Dipropylenglykol in Betracht. Diese Mittel sollen ein Eintrocknen der Zubereitung verhindern.

Als gegebenenfalls weitere in solchen Zubereitungen übliche Hilfsmittel (e) sind z. B. Desinfektionsmittel zur Verhinderung von Pilzbefall, pH-regulierende Substanzen, z. B. Puffersubstanzen wie Phosphate, Basen wie Triethanolamin, Ammoniak, Natronlauge zu nennen. Der Anteil an diesen Hilfsmitteln beträgt maximal bis zu 5, in den meisten Fällen bis 2 Gew.-%, bezogen auf (a + b + c + d).

Die Zubereitungen gemäß der vorliegenden Erfindung werden in an sich bekannter Weise durch Homogenisieren oder Dispergieren von (a) in einer Mischung aus (d) mit (b), (c) und ggf. (e) erhalten. Das Homogenisieren erfolgt durch Rühren. Zur Dispergierung werden Kneter, Kugelmühlen, Rührwerkskugelmühlen oder Perlmühlen verwendet.

Die Erfindung soll durch die folgenden Ausführungsbeispiele weiter erläutert werden. Die im folgenden angegebenen Teile und Prozentangaben beziehen sich auf das Gewicht. Die Viskosität der Zubereitungen wurde durch die Auslaufzeit der Zubereitung aus dem Fordbecher mit 8 mm Düse (DIN 53 211) charakterisiert.

I. Herstellung der Copolymerisate (c)

3

I.1 Copolymerisat 1

Eine Mischung aus Styrol, Acrylsäure und Maleinsäureanhydrid (Verhältnis 70 : 24 : 6 Teile) wurde kontinuierlich einer Polymerisationszone zugeführt, die aus einem 1 l-Druckkessel mit einem nachgeschalteten Druckrohr (1,5 l) besteht. Die Polymerisation wird bei einer Temperatur von 280 °C und einem Druck von 30 bar durchgeführt. Die mittlere Verweilzeit der Monomeren in der Polymerisationszone beträgt 15 Min. Die restlichen Monomeren wurden bei einem Druck zwischen 10 bis 15 Torr bei Temperaturen zwischen 120 und 180 °C entfernt. Anschließend wurde das Copolymerisat in einer solchen Menge 5 %igem Ammoniakwasser gelöst, daß eine 25 %ige Lösung erhalten wurde. Das Molekulargewicht des Copolymerisats : 1 400 (bestimmt in 0,1 gew.-%iger Lösung in Chloroform bei 37 °C im MECHROLAB-Osmometer).

I.2 Copolymerisat 2

Eine Mischung aus Vinyltoluol, Methacrylsäure und Maleinsäure (Verhältnis 7 : 1 : 2 Teile) wurde gemäß Beispiel I.1 polymerisiert. Die Polymerisationstemperatur betrug 240 °C, der Druck 24 bar. Die mittlere Verweilzeit der Monomeren in der Reaktionszone : 20 Min. Das Copolymerisat (Molekulargewicht 1 900) wird mit einer 10 %igen wäßrigen Lösung von Ethylendiamin umgesetzt. Die Neutralisationstemperatur betrug 180 °C, die erhaltene Lösung hatte einen Feststoffgehalt von 20 %.

I.3 Copolymerisat 3

Eine Mischung aus Styrol, Acrylsäure und Maleinsäureanhydrid (Verhältnis 6 : 2 : 2 Teile) wurde gemäß I.1 polymerisiert und das Polymere in 6 %iger Natronlauge zu einer 25 %igen Lösung neutralisiert.

I.4 Copolymerisat 4

Eine Mischung aus Styrol, Acrylsäure und Maleinsäureanhydrid (Verhältnis 63 : 14 : 23 Teile) wurde wie bei I.1 angegeben polymerisiert und aus dem Polymerisat eine 25 %ige wäßrige Natriumsalzlösung hergestellt.

I.5 Copolymerisat 5

Eine Mischung aus Styrol und Maleinsäureanhydrid (Verhältnis 80 : 20 Teile) wurde wie bei I.1 angegeben polymerisiert und das Polymere in Ammoniakwasser (5 %ig) zu einer 20 %igen Lösung gelöst.

II. Ausführungsbeispiele

Beispiel 1

650 Teile eines Eisenoxidrot-Pigments werden in eine Lösung aus 150 Teilen Dipropylenglykol, 120 Teilen Wasser, 10 Teilen einer 30 %igen Lösung von 3-Methyl-4-chlorphenol in Ethylenglykol, 10 Teilen einer 25 %igen wäßrigen Lösung des Ammoniumsalzes des Copolymerisats 1 (I.1) und 60 Teilen des Umsetzungsproduktes von Ethylendiamin mit Propylenoxid und Ethylenoxid (Ethylenoxidanteil im Molekül 40 %, Molekulargewicht ca. 12 000) eingerührt und in einer Rührwerkskugelmühle gemahlen (5 Passagen). Es wird eine gut gießbare, stabile Dispersion erhalten. Auslaufzeit : 10 s, Fordbecher (DIN 53 211) 8 mm Düse. Pigmentgehalt : 65 %.

Ohne dem Zusatz des Copolymerisats oder nur mit dem Polymeren allein wurde eine nicht mehr rührbare Paste erhalten.

Beispiel 2

550 Teile eines Eisenoxidgelb-Pigments werden in eine Lösung von 30 Teilen des Umsetzungsproduktes von Ethylendiamin mit Propylenoxid und Ethylenoxid (Molgewicht 12 000, Anteil EO 40 %), 20 Teilen einer 25 %igen wäßrigen Lösung des Natriumsalzes des Copolymerisats 3 aus (I.3), 10 Teilen Triethanolamin und 10 Teilen einer 30 %igen Lösung von 3-Methyl-4-chlorphenol in Ethylenglykol in 200 Teilen Dipropylenglykol und 180 Teilen Wasser eingerührt und in einer Rührwerkskugelmühle gemahlen (5 Passagen). Auslaufzeit : 8 s. In Abwesenheit des Copolymerisats oder nur mit dem Copolymerisat allein (d. h. in Abwesenheit des PO/EO-Umsetzungsproduktes) wurde eine steife Paste erhalten.

Beispiel 3

700 Teile eines Nickeltitangelbs werden in eine Lösung von 50 Teilen eines Umsetzungsproduktes von Ethylendiamin mit PO und EO (EO-Anteil : 40 %, Molekulargewicht 7 500), 10 Teilen einer 30 %igen Lösung von 3-Methyl-4-chlorphenol in Ethylenglykol und 10 Teilen der 25 %igen Lösung des Copolymeri-

sats 1 (I.1) in 80 Teilen Wasser und 150 Teilen Dipropylenglykol eingetragen, homogen gerührt und dann in einer Rührwerkskugelmühle gemahlen (3 Passagen). Auslaufzeit : 12 s.

In Abwesenheit des Copolymerisats erhält man eine nicht mehr rührbare Paste.

## Beispiel 4

3 400 Teile eines Chromtitangelbs werden in eine Lösung von 50 Teilen einer 30 %igen Lösung von 3-Methyl-4-chlorphenol in Ethylenglykol, 150 Teilen des Umsetzungsproduktes aus Ethylendiamin mit PO und EO (EO-Anteil : 40 % ; Molgewicht 12 000) und 50 Teilen einer 20 %igen wäßrigen Lösung des Copolymerisats 2 (I.2) in 350 Teile Wasser und 1 000 Teile Dipropylenglykol eingerührt. Die Dispergierung erfolgt in einer Rührwerkskugelmühle (3 Passagen). Es wird eine gut gießbare Zubereitung erhalten. Auslaufzeit : 10 s.

## Beispiel 5

275 Teile eines Bleichromatpigments werden in eine Lösung von 5 Teilen einer 30 %igen Lösung von 3-Methyl-4-chlorphenol in Ethylenglykol, 15 Teilen des Umsetzungsproduktes aus Ethylendiamin mit PO und EO (EO-Anteil : 40 % ; Molekulargewicht : 3 400) und 5 Teilen einer 25 %igen wäßrigen Lösung des Natriumsalzes eines Copolymerisats 4 (I.4) in 100 Teilen Wasser und 100 Teilen Dipropylenglykol eingerührt. Nach Dispergierung in einem Attritor (Dauer : 30 Minuten) wird eine gut gießbare Dispersion erhalten. Auslaufzeit : 8 s. Pigmentgehalt : 55 %.

## Beispiel 6

In eine Lösung aus 300 Teilen des Umsetzungsproduktes aus 1 Mol Ethylendiamin, mit 68 Mol PO und dann mit 72 Mol EO, 50 Teilen einer 30 %igen Lösung von 3-Methyl-4-chlorphenol in Ethylenglykol und 50 Teilen einer 25 %igen wäßrigen Lösung des Ammoniumsalzes des Copolymeren 1 (I.1) in 350 Teilen Wasser und 1 000 Teilen Dipropylenglykol werden 3 250 Teile Titandioxid der Rutilmodifikation eingerührt und in einer Rührwerkskugelmühle dispergiert (2 Passagen). Es wird eine freifließende Dispersion erhalten. Auslaufzeit : 8 s. Pigmentgehalt : 65 %.

## Beispiel 7

350 Teile eines Nickeltitangelb-Pigments werden in eine Lösung aus 5 Teilen einer 30 %igen Lösung von 3-Methyl-4-chlorphenol in Ethylenglykol, 15 Teilen des Umsetzungsprodukts aus 1 Mol Trimethylolpropan mit 68 Mol PO und 74 Mol EO und 5 Teilen des wasserlöslichen Copolymerisats 4 (I.4) in 25 Teilen Wasser und 100 Teilen Dipropylenglykol eingerührt und 20 Minuten in einem Attrittor dispergiert. Die erhaltene Dispersion ist gut gießbar. Auslaufzeit : 11 s.

## Beispiel 8

In 50 Teile Wasser werden nacheinander 200 Teile Dipropylenglykol, 10 Teile einer 30 %igen Lösung von 3-Methyl-4-chlorphenol in Ethylenglykol, 30 Teile des Umsetzungsprodukts aus Ethylendiamin mit PO und EO (EO-Anteil : 80 % ; Molekulargewicht : 27 000) und 10 Teile der 25 %igen wäßrigen Lösung des Ammoniumsalzes des Copolymerisats 1 (I.1) eingerührt. In diese Lösung werden 700 Teile eines Nickeltitangelb eingetragen. Die Dispergierung erfolgt in einer Rührwerkskugelmühle (3 Passagen). Die Dispersion ist gut gießbar. Auslaufzeit : 8 s. Pigmentgehalt : 70 %.

## Beispiel 9

135 Teile eines Eisenoxidbraunpigments werden zusammen mit 9 Teilen des Umsetzungsproduktes von Ethylendiamin mit Propylenoxid und Ethylenoxid (Ethylenoxidanteil im Molekül 40 %, Molekulargewicht ca. 12 500), 4,5 Teile einer 25 %igen wäßrigen Lösung des Ammoniumsalzes des Copolymerisats 1 (I.1) und 30 Teile einer Mischung aus 15 Teilen Wasser und 15 Teilen Dipropylenglykol eine Stunde in einem Muldenkneter geknetet. Die Temperatur des Knetmguts stieg dabei auf 65 °C an. Das Knetgut wurde durch Zugeben von Wasser, Dipropylenglykol, Triethanolamin und einer 30 %igen Lösung von 3-Methyl-4-chlorphenol in Ethylenglykol zu einer gießbaren Zubereitung verdünnt, die 50 % Pigment, 20 % Dipropylenglykol, 1 % Triethanolamin und 1 % der 3-Methyl-4-chlorphenollösung enthält. Zur besseren Homogenisierung wurde anschließend noch 15 Minuten in einem Attritor nachgemahlen. Es wurde eine gießbare Zubereitung erhalten. Auslaufzeit : 9 sec.

III. Anwendungsbeispiele

1. Dispersionsfarbe

a) Weißbinder eine Mischung aus

14 Teilen Bariumsulfat,

14 Teilen Calcium/Magnesiumsulfat,

14 Teilen Titandioxid,

13 Teilen einer wäßrigen Lösung, die 2 % einer 25 %igen wäßrigen Ammoniaklösung, 1 % des Natriumsalzes einer Polyacrylsäure und 1 % Natriumhexametaphosphat enthält,

35 Teilen Polyvinylpropionatdispersion (ca. 50 % Feststoffgehalt) und

5 Teile einer 2 %igen wäßrigen Lösung eines Celluloseäthers (im Mittel 1,5-Methoxygruppen je Glukoseeinheit) Viskosität der 2 %igen wäßrigen Lösung bei 20 °C 1 800 bis 2 500 mPa.s.

b) Dispersionsfarbe

100 Teile Weißbinder a) wurden mit 5 Teilen der nach Beispiel 1 erhaltenen Pigmentzubereitung homogen gemischt. Die Farbe wird auf Tapetenpapier aufgestrichen. Man erhält einen warmen dunklen Braunton.

2. Streichputz

a) Grundmasse

Diese ist eine Mischung aus

300 Teilen Sand

16 Teilen Magnesiumsilikat,

24 Teilen Titandioxid,

3 Teilen Ethylenglykolmonobutyläther,

4 Teilen Testbenzin,

20 Teilen einer 2 %igen wäßrigen ammoniakalischen Lösung des Mischpolymerisats aus Acrylsäurenitril und Acrylsäuremethylester (1 : 1 Teile),

1 Teil Entschäumer,

8 Teilen einer 10 %igen wäßrigen Natriumpolyphosphatlösung und

100 Teilen einer Styrol-Acrylat-Copolymerdispersion (Feststoffgehalt : 50 %).

b) farbiger Putz

100 Teile der Grundmasse a) werden mit 5 Teilen der Zubereitung von Beispiel 3 homogen gemischt. Der Streichputz hat einen mittleren grünstichig gelben Farbton.

Mit 1 Teil Zubereitung des Beispiels 3 wird ein hellgrünstichig gelber Putz erhalten.

3. Wäßrige Flexodruckfarbe

a) Bindemittellösung

25 Teile Phthalsäure-hexantriolester werden unter Rühren in eine Mischung aus

50 Teilen Wasser,

3 Teilen 25 %igem wäßrigen Ammoniak und

22 Teilen n-Propanol gelöst.

b) Druckfarbe

100 Teile der Bindemittellösung a) werden mit 5 Teilen der nach Beispiel 4 erhaltenen Pigmentzubereitung homogen gemischt.

Im Flexodruck auf Papier wird ein heller rotstichig gelber Druck erhalten.

Mit 20 Teilen Pigmentzubereitung wird eine Flexodruckfarbe erhalten, die kräftige rotstichig gelbe Drucke liefert.

4. Textildruckpaste

a) Emulsionsverdickung, bestehend aus

140 Teile Wasser

10 Teile Umsetzungsprodukt von $C_{16}/C_{18}$-Alkoholgemisch mit EO (1 : 23 Mol),

50 Teile einer 5 %igen wäßrigen Lösung von Methylcellulose,

30 Teile einer 33 %igen Lösung von Diammoniumphosphat,

770 Teile Benzin.

Die Bestandteile werden in der angegebenen Reihenfolge in das Wasser eingerührt.

b) Druckpaste

120 Teile der nach Beispiel 7 erhaltenen Zubereitung und
150 Teile Pigmentbinder (40 %ige wäßrige Dispersion eines Copolymerisats aus Acrylsäurebutylester, Acrylnitril, Vinylchlorid und N-Methylolacrylamid-65 : 15 : 15 : 5 Teile) werden gemischt und in 750 Teile der Emulsionsverdickung a) eingerührt. Man erhält eine stable farbstarke Druckpaste.

Man erhält nach dem Fixieren farbstarke Drucke mit grünstichigem Gelb.

**Ansprüche**

1. Konzentrierte flüssige Zubereitungen von anorganischen Pigmenten, enthaltend — bezogen auf $(a + b + c + d)$ —

a) 50 bis 80 Gew.-% feinteiliges anorganisches Pigment,
b) 1 bis 15 Gew.-% mindestens eines Oxalkylierungsprodukts auf der Basis von
$b_1$) Umsetzungsprodukten von $C_2$- oder $C_3$-Alkylendiaminen oder Poly-$C_2$- oder -$C_3$-alkylendiaminen mit Propylenoxid und dann mit Ethylenoxid,
$b_2$) Umsetzungsprodukten von aliphatischen oder cycloaliphatischen Hydroxyverbindungen mit 3 bis 9 C-Atomen und 3 bis 6 primären und/oder sekundären Hydroxylgruppen mit Propylenoxid und dann mit Ethylenoxid, wobei der Anteil an den endständigen Polyethylenoxidblöcken bei den Umsetzungsprodukten $b_1$) und $b_2$) 40 bis 80 Gew.-% beträgt, oder Gemischen davon
c) 0,1 bis 7 Gew.-% eines Copolymerisates, das in Form seiner Alkalimetall- oder Ammoniumsalze wasserlöslich ist und das — bezogen auf das Copolymerisat in Form der freien· Säure — aus
$c_1$) 90 bis 50 Gew.-% Styrol und/oder Vinyltoluol,
$c_2$) 10 bis 50 Gew.-% Acrylsäure, Methacrylsäure und/oder Maleinsäureanhydrid
aufgebaut ist und das Copolymere ein mittleres Molekulargewicht von 500 bis 10 000 hat und die Carboxylgruppen zu 50 bis 100 % neutralisiert sind,
d) 18,9 bis 48,9 Gew.-% Wasser oder Mischungen aus Wasser und Wasserrückhaltemitteln und gegebenenfalls
e) bis zu 5 Gew.-% weitere in solchen Zubereitungen übliche Hilfsmittel.

2. Zubereitungen gemäß Anspruch 1, enthaltend — bezogen auf $(a + b + c + d)$ —

50 bis 70 Gew.-% (a),
1 bis 7 Gew.-% (b),
0,1 bis 1 Gew.-% (c),
28,9 bis 48,9 Gew.-% (d) und
0 bis 2,5 Gew.-% (e).

3. Zubereitungen gemäß Anspruch 1 oder 2, dadurch gekennzeichnet, daß (c) ein Copolymerisat aus

60 bis 80 Gew.-% ($c_1$) und
20 bis 40 Gew.-% ($c_2$) ist.

4. Zubereitungen gemäß Anspruch 3, dadurch gekennzeichnet, daß (c) ein Copolymerisat aus ($c_1$) Styrol und ($c_2$) Acrylsäure, Methacrylsäure, Maleinsäureanhydrid oder Gemischen davon ist.
5. Zubereitungen gemäß den Ansprüchen 1, 2, 3 oder 4, dadurch gekennzeichnet, daß (c) ein mittleres Molekulargewicht von 500 bis 5 000 aufweist.
6. Zubereitungen gemäß den Ansprüchen 1, 2, 3 oder 4, dadurch gekennzeichnet, daß (c) ein mittleres Molekulargewicht von 800 bis 2 800 aufweist.
7. Zubereitungen gemäß den Ansprüchen 1 bis 6, dadurch gekennzeichnet, daß (b) ein Umsetzungsprodukt von Ethylendiamin, Diethylentriamin, Polyethylenpolyamin mit Propylenoxid und dann mit Ethylenoxid ist, das 40 bis 80 Gew.-% Polyethylenoxidblöcke enthält.
8. Verwendung der Zubereitungen gemäß den Ansprüchen 1 bis 7 zum Färben von wäßrigen Kunststoffdispersionen und wäßrigen Druck- und Lackfarben.

**Claims**

1. A concentrated fluid formulation of inorganic pigments which contains, based on $(a + b + c + d)$,

a) from 50 to 80 % by weight of finely divided inorganic pigment,
b) from 1 to 15 % by weight of at least one oxyalkylation product based on
$b_1$) reaction products of $C_2$-$C_3$-alkylenediamines or poly-$C_2$-$C_3$-alkylenediamines with propylene oxide followed by ethylene oxide, and

b₂) reaction products of aliphatic or cycloaliphatic hydroxy compounds having from 3 to 9 carbon atoms and from 3 to 6 primary, secondary or primary and secondary hydroxyl groups, with propylene oxide and then with ethylene oxide, reaction products b₁) and b₂) each containing 40 to 80 % by weight of terminal polyethylene oxide blocks, or a mixture of such oxyalkylation products,

c) from 0.1 to 7 % by weight of a copolymer which is water-soluble in the form of its alkali metal salts or ammonium salts and has been prepared from (based on the copolymer in the form of the free acid)

c₁) 90 to 50 % by weight of styrene and/or vinyltoluene, and

c₂) 10 to 50 % by weight of acrylic acid, methacrylic acid and/or maleic anhydride, the copolymer having a mean molecular weight of from 500 to 10,000, and from 50 to 100 % of the carboxyl groups being neutralized, and

d) from 18.9 to 48.9 % by weight of water or of a mixture of water and humectants, and

e) from 0 to 5 % by weight of other auxiliaries conventionally used in such formulations.

2. A formulation as claimed in claim 1, which contains, based on (a + b + c + d),

from 50  to 70  % by weight of (a),
from  1  to  7  % by weight of (b),
from  0.1 to  1  % by weight of (c),
from 28.9 to 48.9 % by weight of (d) and
from  0  to  2.5 % by weight of (e).

3. A formulation as claimed in claim 1 or 2, wherein (c) is a copolymer of

from 60 to 80 % by weight of (c₁) and
from 20 to 40 % by weight of (c₂).

4. A formulation as claimed in claim 3, wherein (c) is a copolymer of (c₁) styrene and (c₂) acrylic acid, methacrylic acid, maleic anhydride or a mixture therefore.

5. A formulation as claimed in claim 1, 2, 3 or 4, wherein (c) has a mean molecular weight of from 500 to 5,000.

6. A formulation as claimed in claim 1, 2, 3 or 4, wherein (c) has a mean molecular weight of from 800 to 2,800.

7. A formulation as claimed in claims 1 to 6, wherein (b) is a reaction product of ethylenediamine, diethylenetriamine or polyethylenepolyamine, first with propylene oxide and then with ethylene oxide, the product containing from 40 to 80 % by weight of polyethylene oxide blocks.

8. The use of a formulation as claimed in claims 1 to 7 for coloring aqueous polymer dispersions, aqueous printing inks and water-based paints.

**Revendications**

1. Compositions fluides concentrées de pigments inorganiques, caractérisées en ce qu'elles contiennent — sur la base de la somme (a + b + c + d) :

a) 50 à 80 % en poids de pigment inorganique finement divisé,

b) 1 à 15 % en poids d'au moins un produit d'oxalcoylation à base de

b₁) produits de réaction d'alcoylène (C₂-C₃)-diamines ou de polyalcoylène (C₂-C₃)-diamines avec l'oxyde de propylène, puis avec l'oxyde d'éthylène,

b₂) produits de réaction de composés hydroxylés aliphatiques ou cycloaliphatiques à 3-9 atomes de C et à 3-6 groupes hydroxyles primaires et/ou secondaires avec l'oxyde de propylène, puis avec l'oxyde d'éthylène, la proportion de blocs oxyde de polyéthylène terminaux dans les produits de réaction b₁) et b₂) étant de 40 à 80 % en poids, ou mélanges de ces produits,

c) 0,1 à 7 % en poids d'un produit de copolymérisation qui est soluble dans l'eau sous la forme de ses sels de métaux alcalins ou d'ammonium et qui se compose — sur la base du produit de copolymérisation sous forme de l'acide libre — de :

c₁) 90 à 50 % en poids de styrène et/ou de vinyltoluène,

c₂) 10 à 50 % en poids d'acide acrylique, d'acide méthacrylique et/ou d'anhydride maléique, le copolymère ayant un poids moléculaire moyen de 500 à 10 000 et les groupes carboxyle étant neutralisés pour 50 à 100 %,

d) 18,9 à 48,9 % en poids d'eau ou de mélanges d'eau et d'agents de rétention de l'humidité et, le cas échéant,

e) jusqu'à 5 % en poids d'autres adjuvants couramment utilisés dans de telles compositions.

2. Compositions selon la revendication 1, caractérisées en ce qu'elles contiennent — sur la base de la somme (a + b + c + d) :

50 à 70 % en poids de (a),
1 à 7 % en poids de (b),
0,1 à 1 % en poids de (c),
28,9 à 48,9 % en poids de (d) et
0 à 2,5 % en poids de (e).

3. Compositions selon la revendication 1 ou 2, caractérisées en ce que (c) est un produit de copolymérisation de

60 à 80 % en poids de ($c_1$) et
20 à 40 % en poids de ($c_2$).

4. Compositions selon la revendication 3, caractérisées en ce que (c) est un produit de copolymérisation de ($c_1$) styrène et de ($c_2$) acide acrylique, acide méthacrylique, anhydride maléique ou mélanges de ceux-ci.

5. Compositions selon l'une quelconque des revendications 1 à 4, caractérisées en ce que (c) a un poids moléculaire moyen de 500 à 5 000.

6. Compositions selon l'une quelconque des revendications 1 à 4, caractérisées en ce que (c) a un poids moléculaire moyen de 800 à 2 800.

7. Compositions selon l'une quelconque des revendications 1 à 6, caractérisées en ce que (b) est un produit de réaction d'éthylène-diamine, de diéthylène-triamine ou de polyéthylène-polyamine avec l'oxyde de propylène, puis avec l'oxyde d'éthylène, ce produit contenant 40 à 80 % en poids de blocs oxyde de polyéthylène.

8. Utilisation des compositions selon l'une quelconque des revendications 1 à 7 pour la coloration de dispersions aqueuses de matières synthétiques et d'encres d'imprimerie et laques-émail aqueuses.